# EUROPÄISCHE PATENTSCHRIFT

(11) **EP 3 219 187 B1**
(45) Veröffentlichungstag und Bekanntmachung des Hinweises auf die Patenterteilung: **04.10.2023**
(21) Anmeldenummer: 17161631.1
(22) Anmeldetag: 08.11.2011
(51) Int. Cl.: A01C 23/00, A01M 7/00

(54) **FAHRBARE VORRICHTUNG ZUM AUSBRINGEN VON FLÜSSIGEN UND/ODER FESTEN WIRKSTOFFEN UND VERFAHREN ZUR STEUERUNG DER VORRICHTUNG**
MOVEABLE DEVICE FOR DISPENSING FLUID AND/OR SOLID SUBSTANCES AND METHOD FOR CONTROLLING THE DEVICE
DISPOSITIF MOBILE DESTINÉ À SORTIR DES AGENTS ACTIFS LIQUIDES ET/OU SOLIDES ET PROCÉDÉ DE COMMANDE DU DISPOSITIF

(43) Veröffentlichungstag der Anmeldung: 20.09.2017
(62) Teilanmeldung aus: 11188169.4
(73) Patentinhaber: HORSCH LEEB Application Systems GmbH, 94405 Landau an der Isar (DE)
(72) Erfinder: LEEB, Theodor, 94562 Oberpöring (DE); HIRTHAMMER, Otto, 92421 Schwandorf (DE)
(74) Vertreter: v. Bezold & Partner Patentanwälte - PartG mbB

(56) Entgegenhaltungen:
- EP-A2- 0 157 592
- WO-A1-2004/041446
- DE-A1- 4 140 254
- DE-A1-102007 025 751
- FR-A1- 2 270 774
- FR-A1- 2 779 031

## Beschreibung

Die vorliegende Erfindung betrifft ein Verfahren zur Bewegungssteuerung und/oder -regelung einer Vorrichtung zum Ausbringen von flüssigen und/oder festen Wirkstoffen mit den Merkmalen des unabhängigen Verfahrensanspruchs 1. Die Erfindung betrifft weiterhin eine fahrbare Vorrichtung zum Ausbringen von flüssigen oder festen Wirkstoffen mit den Merkmalen des unabhängigen Anspruchs 10.

Feldspritzen und an Arbeitsmaschinen wie Traktoren angehängte Spritzgestänge weisen teilweise sehr große Arbeitsbreiten von mehr als zwanzig Metern auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abtrift des Spritzmittels mit zunehmender Distanz der Spritzdüsen vom Boden stark an, da die fein verstäubten Tropfen bereits von geringen Luftbewegungen negativ beeinflusst werden.

Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Düsen zum Boden führen.

Ein Spritzgestänge, welches über einen aus Segmenten zusammengesetzten Ausleger verfügt, ist aus dem Stand der Technik bereits bekannt. So wird in der DE 32 02 569 A1 eine Verteilermaschine offenbart, bei der einzelne Segmente miteinander verbunden sind und die Bewegung der einzelnen Segmente passiv erfolgt. Für diesen Mechanismus ist ein stützendes Element auf der Außenseite eines jeden Auslegers notwendig, um den Schwenkvorgang zu ermöglichen. Zur Vermeidung von Ertragseinbußen ist es jedoch wünschenswert, ein Anpassen der einzelnen Segmente hinsichtlich unterschiedlicher Bodenkonturen zu erreichen, ohne mit dem Boden in direktem Kontakt zu stehen.

Die DE 10 2007 025 751 A1 offenbart eine Verteilmaschine mit einem sich auf einem Fahrwerk auf den Boden abstützenden Rahmen und einem an dem Rahmen zumindest um eine in Fahrtrichtung verlaufende Schwenkachse sowie um eine vertikale Mittelachse bewegbar angeordneten Verteilergestänge, wobei zwischen dem Rahmen und dem Verteilergehäuse wirkende und von einer elektronischen Regeleinrichtung ansteuerbare Mittel, mittels denen eine zumindest annähernde Parallellage des Verteilergestänges zur behandelnden Fläche erreichbar ist, angeordnet ist. Um die Regeleinrichtung derart zu verbessern, dass die von Fahrwerk auf den Rahmen übertragenden Bewegungen der Verteilmaschine nicht auf das Verteilergestänge übertragen werden, ist vorgesehen, dass die in Fahrtrichtung verlaufende Schwenkachse und die vertikale Mittelachse zumindest annähernd durch den Schwerpunkt des Verteilergestänges verlaufen, dass Sensoren zur Erfassung der Bewegungen des Rahmens vorgesehen sind, dass die von den Sensoren erfassten Signale über die Bewegung des Rahmens an die elektronische Regeleinrichtung übermittelt werden, dass Mittel zum kompensieren der Übertragung der Rahmenbewegung auf das Verteilergestänge vorgesehen sind, dass die elektronische Regeleinrichtung Steuer- und/oder Regelsignale an die Kompensationsmittel übermitteln.

Weiterhin wird in der DE 18 33 453 U ein Spritzgestänge offenbart, welches Düsenbäume umfasst, die an einem Ausleger mittels elastischer Elemente angeordnet sind. Durch die elastischen Elemente können sich die Düsenbäume auch nach einem Schwenkvorgang des Auslegers in einer vertikalen Position wiederfinden. Da der Ausleger gemäß diesem Dokument nur um eine Achse schwenkbar angeordnet ist, besitzt das Spritzgestänge lediglich eine eingeschränkte Flexibilität. Aufgrund der hohen Unregelmäßigkeit von in der Praxis auftretenden Bodenstrukturen sind Spritzgestänge mit einer größeren Flexibilität wünschenswert, um eine gleichmäßige Verteilung der Spritzflüssigkeit auf den Untergrund zu gewährleisten.
Ein vorrangiges Ziel der vorliegenden Erfindung besteht darin, ein Spritzgestänge und ein Verfahren zu dessen Ansteuerung zur Verfügung zu stellen, mit deren Hilfe auch bei unebenen Böden und sich bewegendem oder wankendem Träger- oder Zugfahrzeug eine möglichst exakte Beibehaltung der Ausleger- und Düsenabstände an die Bodenoberfläche zu ermöglichen. Zudem soll vermieden werden, dass die Ausleger in Bodenkontakt kommen.

Diese Ziele der Erfindung werden mit einem Verfahren mit den Merkmalen des Anspruchs 1 sowie mit einer Vorrichtung mit den Merkmalen des Anspruchs 8 erreicht.
Merkmale vorteilhafter Weiterbildungen der Erfindung ergeben sich aus den abhängigen Ansprüchen. Zur Erreichung der genannten Ziele der Erfindung schlägt die Erfindung ein Verfahren zur Bewegungssteuerung und/oder -regelung einer Ausbringvorrichtung vor, die zum Ausbringen von flüssigen und/oder festen Wirkstoffen wie Dünger, Spritzmittel o. dgl. vorgesehen sein kann. Diese Ausbringvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge mit einem Mittelteil und seitlichen Auslegerarmen. Das Mittelteil ist über wenigstens eine regelbare Stelleinrichtung mit einem Aufbau- oder Rahmenabschnitt und/oder mit einem starr oder beweglich gelagerten Stützabschnitt des Fahrzeuges gekoppelt. Dieser Stützabschnitt kann bspw. durch einen starr oder beweglich am Fahrzeug gelagerten Koppelrahmen gebildet sein, an dem das/der Mittelteil des Ausbringgestänges beweglich gelagert ist. Wahlweise kann das/der
Mittelteil auch direkt am Fahrzeug bzw. dessen Aufbau gelagert sein. Wenn im vorliegenden Zusammenhang von einer Schwenkbarkeit des Ausbringgestänges ungefähr parallel zur Fahrtrichtung die Rede ist, so sind damit andere Bewegungsfreiheitsgrade des Ausbringgestänges nicht ausgeschlossen. Das erfindungsgemäße Verfahren zur Bewegungssteuerung und/oder -regelung des Ausbringgestänges bezieht sich allerdings nur auf die Schwenkbarkeit parallel zur Fahrtrichtung, bei der die quer zur Fahrtrichtung beidseitig des Fahrzeugs auskragenden Auslegerarme Auf- und Abbewegungen machen.

Das erfindungsgemäße Verfahren sieht wenigstens zwei unterschiedliche Betriebsmodi vor. In einem ersten Betriebsmodus, in dem das Ausbringgestänge weitestgehend von Drehmomenten um die Schwenkachse durch den Aufhängepunkt, die insbesondere aus Fahrzeugbewegungen um die Fahrzeuglängsachse resultieren, entkoppelt ist, stellt die steuerbare Stelleinrichtung eine weitgehend stellkraftfreie mechanische Verbindung zwischen dem Mittelteil und dem Stützabschnitt bzw. dem Aufbau- oder Rahmenabschnitt her. So kann der erste Betriebsmodus insbesondere durch einen Fahrmodus des Fahrzeugs in ebenem Gelände charakterisiert sein, wo keine dauerhafte Verschwenkung des Spritzgestänges um den Aufhängepunkt des Fahrzeugs bzw. des Stützgestells gewünscht ist, da die Auslegerarme annähernd horizontal angeordnet sind und dabei jeweils einen ungefähr gleichen Abstand zur Bodenoberfläche aufweisen.

Dagegen wird bei einem zweiten Betriebsmodus, der insbesondere einen Verstellmodus bildet, eine definierte Stellkraft und/oder ein definiertes Stellmoment zwischen dem Mittelteil des Spritz- oder Ausbringgestänges und dem Stütz-, Aufbau- oder Rahmenabschnitt eingeleitet, um eine definierte Verschwenkung des Ausbringgestänges relativ zum Stützabschnitt, Aufbau oder Rahmen zu ermöglichen, wie es insbesondere bei einer Fahrzeugbewegung quer zu einer Bodenneigung bzw. entlang von Höhenlinien einer mit Steigungen versehenen Bodenoberfläche erforderlich sein kann, um einen gleichmäßigen Abstand der Auslegerarme des Spritz- oder Ausbringgestänges zur Bodenoberfläche gewährleisten zu können. Dem entsprechend kann der zweite Betriebsmodus bzw. der Verstellmodus insbesondere durch einen Fahrmodus in geneigtem Gelände charakterisiert sein. Fährt also das Fahrzeug in ebenem Gelände, befindet sich die erfindungsgemäße Vorrichtung bzw. das Verfahren im ersten Betriebsmodus, bei dem das Gestänge in Ruhe bleiben soll, auch wenn das Fahrzeug geringe oder größere Aufbaubewegungen aufgrund der unvermeidlichen Bodenunebenheiten ausführt. Fährt nun das Fahrzeug in eine Hangneigung hinein, so erkennen geeignete Sensoren, die bspw. an den Auslegerarmen des Spritzgestänges angeordnet sein können, unterschiedliche Abstände zur Bodenoberfläche, woraus auf eine Bodenneigung geschlossen werden kann. Eine solche Bodenneigung kann auch durch andere Sensoren erkannt werden, bspw. durch Neigungssensoren am Fahrzeug oder am Spritzgestängerahmen, durch einen Abgleich mit Geokoordinaten etc. Um die Abstände der am Spritzgestänge angeordneten Spritzdüsen oder Ausbringelemente weitgehend konstant zur Bodenoberfläche zu halten, was aus Gründen der Ausbringqualität unverzichtbar ist, wechselt die Steuerung in den zweiten Betriebsmodus, in dem Verstellkräfte vom Fahrzeug bzw. vom Aufbaurahmen in das Spritzgestänge eingeleitet werden, bis die gewünschte neue Lage erreicht ist, bei der die Auslegerarme wieder weitgehend parallel zur Bodenoberfläche stehen. Sobald diese Lage erreicht ist, soll das Spritzgestänge bei weiteren Fahrzeug- und Aufbaubewegungen weitgehend in seiner erreichten Absolutlage bleiben, d.h. die Schwankungen des Fahrzeuges nicht übertragen bekommen. Aus diesem Grund wird wieder der erste Betriebsmodus gewählt, bei dem die Aufhängung von Stellkräften und -momenten weitgehend freigehalten und die erreichte Absolutlage des Spritzgestänges beibehalten werden kann. Die Übergänge zwischen den wenigstens zwei Betriebsmodi können normalerweise innerhalb einer Bandbreite eines Übergangsbereichs stattfinden. Insbesondere sind die Grenzen zwischen den Betriebsmodi fließend zu sehen, so dass die Übergänge vorzugsweise mit nicht exakt eingegrenzter Grenze zwischen den Betriebsmodi stattfinden.

Ein Wechsel zwischen dem ersten und dem zweiten Betriebsmodus kann erfindungsgemäße mittels Sensoranordnungen initiiert werden, die eine Fahrzeugneigung und/oder die Abstände zwischen den Auslegerarmen und einer Bodenoberfläche erfassen, bspw. mittels geeigneter Sensoren wie Ultraschallsensoren und/oder optisch arbeitender Sensoren, von denen vorzugsweise mindestens einer an jedem Auslegerarm angeordnet ist. Darüber hinaus sind grundsätzlich alle denkbaren Arten von Sensoren und Messprinzipien einsetzbar, auch solche, die im Zusammenhang der vorliegenden Anmeldung nicht genannt sind, die jedoch dem mit der Thematik befassten technischen Fachmann als sinnvolle Option zur Verfügung stehen.

Erfindungsgemäß ist die regelbare Stelleinrichtung mit wenigstens einem Sensorelement gekoppelt, das Stellkräfte und/oder Stell- bzw. Relativbewegungen erfasst, die zwischen dem Mittelteil der Ausbringvorrichtung bzw. des Ausbringgestänges und dem Stütz-, Aufbau- oder Rahmenabschnitt auftreten. Dieses Sensorelement kann so ausgestaltet und eingesetzt werden, dass es Bewegungen der Stelleinrichtung und/oder auf die Stelleinrichtung wirkende Stellkräfte zwischen dem Stütz-, Aufbau- oder Rahmenabschnitt und der Anlenkung am Mittelteil erfasst und daraus ein Ausgangssignal zur Ansteuerung der Stelleinrichtung generiert, um auf diese Weise dessen weitgehend stellkraftfreie Anlenkung im ersten Betriebsmodus oder die definierte Stellkraft im zweiten Betriebsmodus gewährleisten zu können. Zusätzlich kann die regelbare Stelleinrichtung auch mit wenigstens einem, dem Fahrzeug zugeordneten und dessen Aufbaubewegungen erfassenden Sensorelement gekoppelt sein, dessen Ausgangssignale in beschriebener Weise zur Ansteuerung der Stelleinrichtung genutzt werden.

Im ersten Betriebsmodus ist es vorteilhaft, wenn die weitgehend stellkraftfreie mechanische Verbindung zwischen dem Mittelteil und dem Stütz-, Aufbau- oder Rahmenabschnitt des Fahrzeugs und/oder der Ausbringvorrichtung dadurch gewährleistet wird, dass die Stellbewegungen der Stelleinrichtung annähernd in Echtzeit den Relativbewegungen folgen, die zwischen dem Ausbringgestänge bzw. dessen Mittelteil und dem Fahrzeug und/oder dem Stütz-, Aufbau- oder Rahmenabschnitt auftreten. Während das Fahrzeug über ein ebenes Feld fährt, führen die überfahrenen Bodenunebenheiten zu permanenten unregelmäßigen Aufbaubewegungen, die aufgrund der um eine annähernd parallel zur Fahrtrichtung schwenkbare Aufhängung des Spritz- oder Ausbringgestänges ausgeglichen werden können, so dass die Auslegerarme weitgehend in Ruhe bleiben. Eine permanente Ausregelung der Fahrzeugbewegungen mit einer damit verbundenen Stellkraftübertragung auf das Spritz- oder Ausbringgestänge bzw. dessen Mittelteil ist in diesem Betriebsmodus nicht gewünscht, obwohl die Stelleinrichtung eine permanente mechanische Verbindung zwischen dem Fahrzeug und dem Spitzgestänge herstellt. Um jedoch in diesem ersten Betriebsmodus keine unerwünschten Stellkräfte in das Spritz- oder Ausbringgestänge einzuleiten, ist eine Echtzeit- oder Quasi-Echtzeit-Regelung der Stelleinrichtung vorgesehen, die zu jedem Zeitpunkt versucht, weitgehend alle Stellkräfte zwischen dem Spritz- oder Ausbringgestänge und seiner Aufhängung am Fahrzeug zu eliminieren, was dadurch gewährleistet wird, dass die Relativbewegungen und/oder Relativkräfte erfasst und die Stelleinrichtung permanent in entsprechender Weise angesteuert bzw. ausgelenkt und/oder verdreht wird, so dass die Stelleinrichtung den erwünschten Ausgleichsbewegungen des Spritz- oder Ausbringgestänges, die dieses in der Horizontalen halten, jederzeit folgt, ohne dass dabei nennenswerte Stellkräfte zwischen den Aufhängepunkten der Stelleinrichtung übertragen werden. Fährt das landwirtschaftliche Zugfahrzeug über den Ackerboden, sorgen Bodenunebenheiten für Aufbaubewegungen des Zugfahrzeuges, bei denen das Spritz- oder Ausbringgestänge jedoch - absolut gesehen - weitgehend in Ruhe bleiben soll. Somit treten Relativbewegungen und/oder -kräfte zwischen dem Zugfahrzeug und dem Spritz- oder Ausbringgestänge auf, die mit Hilfe der entsprechenden Ansteuerung der Stelleinrichtung berücksichtigt und ausgeregelt werden sollen.

Dagegen ist es im zweiten Betriebsmodus vorteilhaft, die mit definierter Stellkraft und/oder mit definiertem Stellmoment beaufschlagte mechanische Verbindung zwischen dem Mittelteil und dem Stütz-, Aufbau- oder Rahmenabschnitt des Fahrzeugs und/oder der Ausbringvorrichtung mittels annähernd in Echtzeit den Relativbewegungen zwischen dem Ausbringgestänge bzw. dessen Mittelteil und dem Fahrzeug und/oder dem Stütz-, Aufbau- oder Rahmenabschnitt folgenden Stellbewegungen der Stelleinrichtung herzustellen und aufrechtzuerhalten. Den Relativbewegungen zwischen dem Fahrzeug und der Ausbringvorrichtung bzw. dessen Aufhängepunkten wird im zweiten Betriebsmodus ein - je nach gewählten Bezugspunkt - Verstellwert, d.h. entweder ein Verstellwinkel oder ein Verstellweg überlagert, der zu einer gewünschten Verschwenkung des Spritz- oder Ausbringgestänges zum Ausgleich einer Bodenneigung führt. Wichtig bei diesem zweiten Betriebsmodus bzw. Verstellmodus ist jedoch die ununterbrochene Aufrechterhaltung der auch im ersten Betriebsmodus bestehenden Entkoppelung zu den Aufbauschwankungen des Fahrzeugs. Zwar wird im zweiten Betriebsmodus die Verstelleinrichtung dazu genutzt, eine definierte Verstellkraft zwischen ihren endseitigen Anlenkungspunkten aufzubringen und damit eine Verschwenkung des Spritz- oder Ausbringgestänges einzuleiten. Durch die weiterhin beibehaltene Echtzeit- oder Quasi-Echtzeit-Regelung wird diese Verstellkraft jedoch bei allen Fahrzeugbewegungen weitgehend konstant gehalten, so dass auch im Verstellmodus keine unerwünschten Stellkräfte oder Haltekräfte durch die Verstelleinrichtung in die Aufhängung bzw. das Spritz- oder Ausbringgestänge eingeleitet werden, die zu unerwünschten Folgebewegungen des Spritz- oder Ausbringgestänges und in ungünstigen Fällen sogar zu Kollisionen der Auslegerarme mit der Bodenoberfläche führen könnten.

Wahlweise können die Stellbewegungen der Stelleinrichtung durch rotatorische Stellbewegungen eines zwischen dem Fahrzeug und/oder dessen Stütz-, Aufbau- oder Rahmenabschnitts und dem Mittelteil angeordneten Drehantriebes oder durch lineare Stellbewegungen eines zwischen dem Fahrzeug und/oder dessen Stütz-, Aufbau- oder Rahmenabschnitts und dem Mittelteil angeordneten Linearantriebes durchgeführt werden. Ein Drehantrieb kann bspw. durch einen hydraulischen oder elektrischen Drehantrieb, insbesondere durch einen über ausreichendes Drehmoment verfügenden Elektromotor gebildet sein, der sinnvollerweise über ein Untersetzungsgetriebe angekoppelt sein kann. Ein Linearantrieb kann insbesondere durch einen hydraulisch oder pneumatisch arbeitenden, doppelt wirkenden Stellzylinder oder auch durch einen elektrischen Linearantrieb o. dgl. gebildet sein.

Die Aufhängung des Spritz- oder Ausbringgestänges kann bspw. auf eine Weise ausgestaltet sein, dass der Aufhängepunkt des Mittelteils mit den daran vorzugsweise symmetrisch angeordneten Auslegerarmen ungefähr im Schwerpunkt des Spritz- oder Ausbringgestänges liegt, so dass dessen Schwenkbewegungen im Wesentlichen nur durch die Massenträgheiten des Gesamtsystems beeinflusst werden. Bei einer solchen Aufhängung befindet sich das Ausbringgestänge in jeder ausgelenkten Lage weitgehend im Gleichgewicht und strebt nicht in eine zuvor bestehende Lage zurück. Allerdings kann der Aufhängepunkt des Spritz- oder Ausbringgestänges auch außerhalb des Schwerpunktes liegen, ohne dass dadurch die Funktion oder erfindungsgemäße Wirkungsweise in irgendeiner Form beeinträchtigt wäre.

Es sei an dieser Stelle betont, dass die vorliegende Erfindung nicht nur ein Verfahren zur Bewegungssteuerung und/oder -regelung der Ausbringvorrichtung umfasst, wie es zuvor in verschiedenen Varianten beschrieben wurde. Die Erfindung bezieht sich gleichermaßen auf eine solche fahrbare Ausbringvorrichtung, wie sie im unabhängigen Anspruch 10 definiert ist. Die einen Teil der erfindungsgemäßen Ausbringvorrichtung bildende regelbare Stelleinrichtung ist mit wenigstens einem Sensorelement gekoppelt, das der Erfassung von Stellkräften und/oder Stell- bzw. Relativbewegungen zwischen dem Mittelteil des Ausbringgestänges und dem Stütz-, Aufbau- oder Rahmenabschnitt dient. Das Sensorelement kann bspw. durch einen optischen oder mechanischen Weg- und/oder Winkelerfassungssensor gebildet sein, mit dessen Hilfe sich Bewegungen der Stelleinrichtung zwischen dem Stütz-, Aufbau- oder Rahmenabschnitt und der Anlenkung am Mittelteil erfassen lassen. Wahlweise kann das Sensorelement auch durch wenigstens einen Kraftsensor zur Erfassung von auf die Stelleinrichtung einwirkenden Relativkräften zwischen dem Stütz-, Aufbau- oder Rahmenabschnitt und der Anlenkung am Mittelteil gebildet sein. Wesentlich für die einwandfreie Funktion der erfindungsgemäßen Vorrichtung ist die zumindest näherungsweise in Echtzeit erfassten Stellbewegungen und/oder Stellkräfte, deren schnelle Verarbeitung es ermöglichen, die im ersten Betriebsmodus weitgehend stellkraftfreie mechanische Verbindung zwischen dem Spritz- oder Ausbringgestänge und dessen Aufhängung am Fahrzeug bzw. an dessen Stütz- oder Hilfsrahmen zu ermöglichen. Gleichermaßen können dadurch im zweiten Betriebsmodus die definierten Stellkräfte aufrechterhalten werden, die für die gewünschte Verschwenkung des Spritz- oder Ausbringgestänges um seinen Aufhängepunkt erforderlich sind, ohne dass während des Verschwenkvorganges unerwünschte Stellkräfte oder Stellmomente eingeleitet werden, welche zu unerwünschten Bewegungen des Spritz- oder Ausbringgestänges führen könnten.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die als nicht einschränkendes Beispiel dient und auf die beigefügten Zeichnungen Bezug nimmt.
Fig. 1 zeigt eine schematische Seitenansicht einer Spritzkombination, bestehend aus einem landwirtschaftlichen Zugfahrzeug und einem aufgesattelten Spritz- oder Ausbringgestänge.
Fig. 2 zeigt in vier schematischen Heckansichten verschiedene Ausführungsvarianten eines am Zugfahrzeug heckseitig angebauten Spritz- oder Ausbringgestänges.
Fig. 3 zeigt drei schematische Detailansichten verschiedener Ausführungsvarianten der Drehlagerung und Aufhängung des Spritz- oder Ausbringgestänges.
Fig. 4 zeigt in zwei weiteren Detailansichten einen Teil der Aufhängung des Spritz- oder Ausbringgestänges.

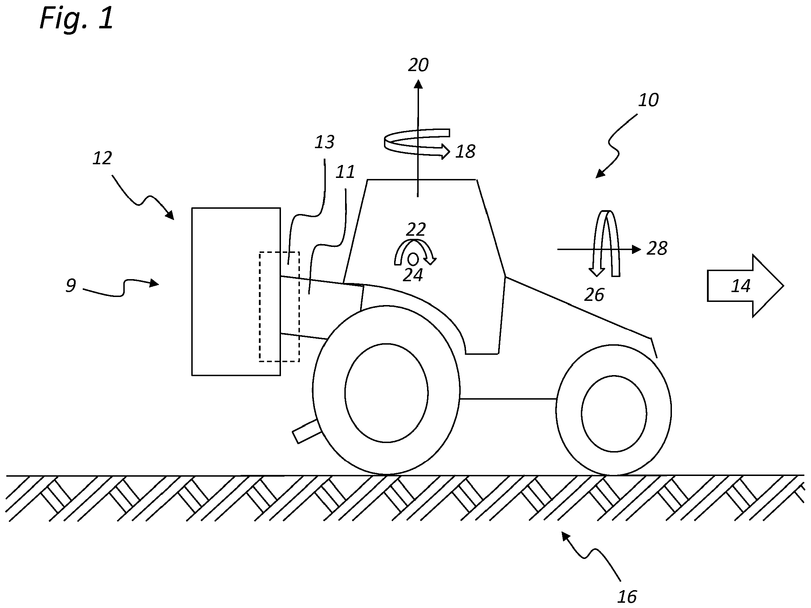

Gleiche oder gleich wirkende Elemente der Erfindung sind in den Figuren 1 bis 4 mit jeweils gleichen Bezugsziffern bezeichnet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die nachfolgend näher erläuterten Figuren 1 bis 4 verdeutlichen bevorzugte Ausführungsformen eines Spritz- oder Ausbringgestänges, wie es typischerweise an Arbeitsmaschinen, Zugmaschinen oder anderen Trägerfahrzeugen angehängt oder aufgesattelt sein kann. Solche Trägerfahrzeuge können bspw. Spezialfahrzeuge sein, die einen Tank für flüssiges Spritzmittel sowie das erfindungsgemäße Spritz- oder Ausbringgestänge tragen können. Als Zugfahrzeuge kommen jedoch gleichermaßen herkömmliche landwirtschaftliche Zugmaschinen bzw. sog. Traktoren in Frage, an denen sich solche Spritz- oder Ausbringgestänge an einer heckseitigen hydraulisch betätigbaren Hebeeinrichtung - meist als Dreipunktgestänge ausgebildet - ankoppeln lassen.

Die schematische Seitenansicht der Fig. 1 zeigt ein landwirtschaftliches Zugfahrzeug 10 mit einer Ausbringvorrichtung 9, die dem Ausbringen von flüssigen und/oder festen Wirkstoffen wie bspw. von Pflanzenschutzmitteln dient. Die Ausbringvorrichtung 9 umfasst im gezeigten Ausführungsbeispiel ein aufgesatteltes Spritz- oder Ausbringgestänge 12, das heckseitig am Zugfahrzeug 10 angebaut ist. Wahlweise kann das Spritz- oder Ausbringgestänge 12 an einem fahrzeugfesten Rahmenabschnitt 11 oder an einem in Fig. 1 lediglich angedeuteten Stützabschnitt 13 gelagert sein. Ein solcher Stützabschnitt 13 kann bspw. durch einen am fahrzeugfesten Rahmenabschnitt 11 gelagerten Koppelrahmen o. dgl. gebildet sein, der am Fahrzeug 10 beweglich oder starr befestigt sein kann. Bei einer Fahrt des Zugfahrzeuges 10 in Fahrtrichtung 14 über einen unebenen Ackerboden 16 kann es bei der Überfahrt von Bodenunebenheiten zu Gierbewegungen 18 um eine Hochachse 20, zu Nickbewegungen 22 um eine Fahrzeugquerachse 24 sowie zu Wankbewegungen 26 um eine Fahrzeuglängsachse 28 kommen. Von diesen Aufbaubewegungen 18, 22 und 26 können sich im Wesentlichen die Gierbewegungen 18 sowie die Wankbewegungen 26 auf das Spritz- oder Ausbringgestänge 12 übertragen, was unter Umständen zu erheblichen Bewegungseinflüssen mit der Folge ungleichmäßiger Düsenabstände zum Boden 16 und unter ungünstigen Umständen sogar zu Bodenberührungen des Spritz- oder Ausbringgestänges 12 führen kann. Im Zusammenhang der vorliegenden Erfindung wird im Wesentlichen nur die Bewegungskomponente der Wankbewegungen 26 um eine zur Fahrzeuglängsachse 28 parallele Achse berücksichtigt, während die unvermeidlichen Bewegungen 18 des Gestänges 12 um die Fahrzeughochachse 20 anderweitig ausgeglichen werden können, was jedoch nicht Gegenstand der vorliegenden Erfindung ist.

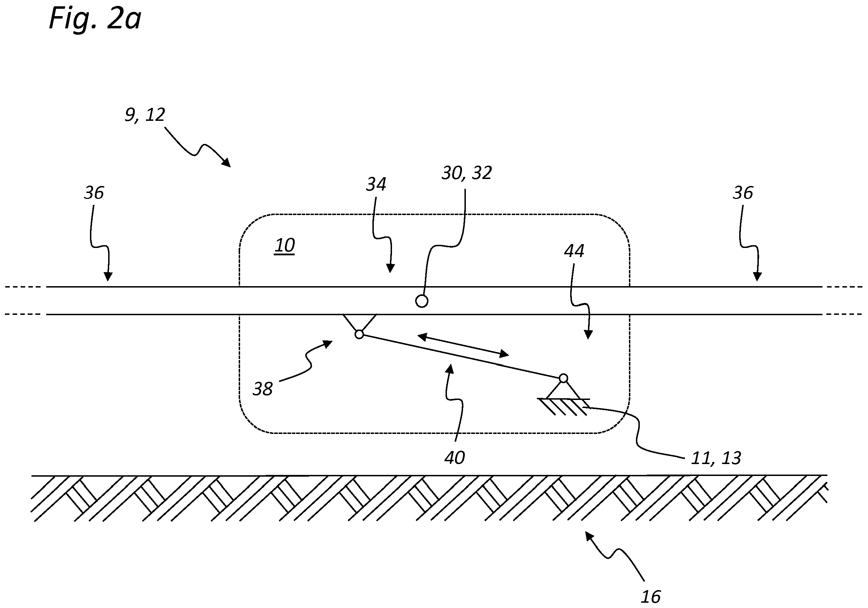

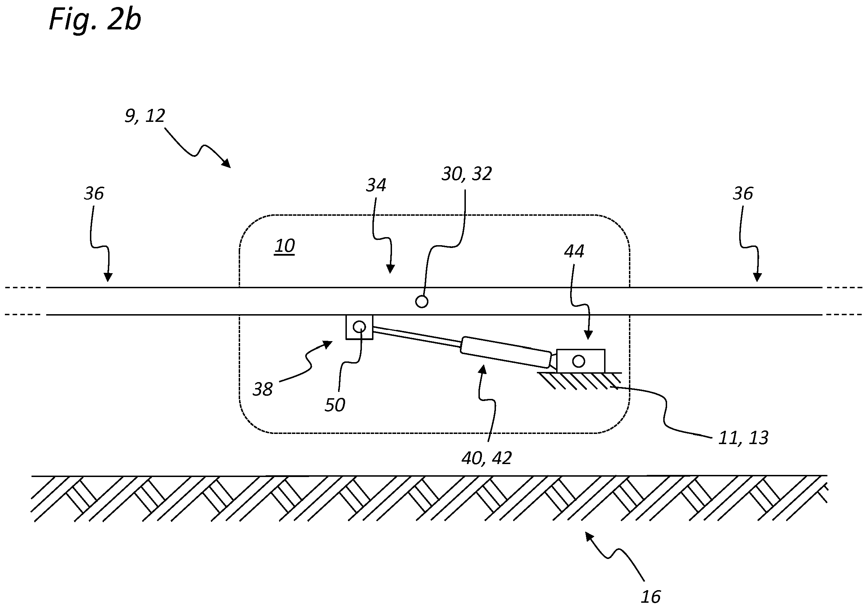

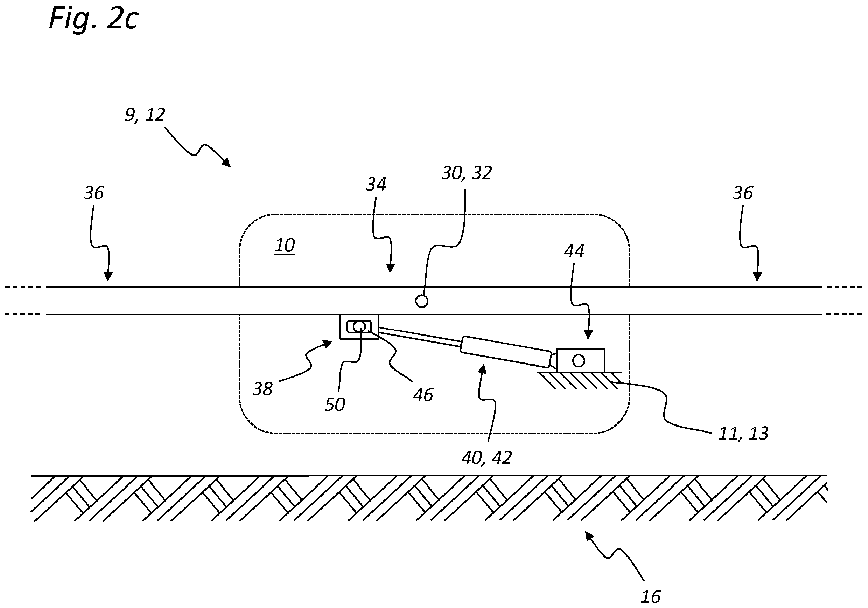

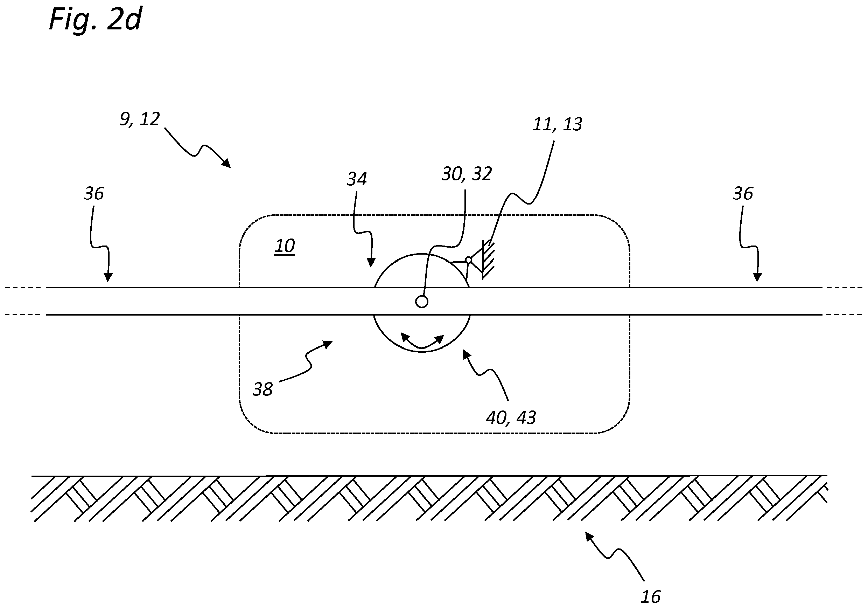

Um zu verhindern, dass das Spritz- oder Ausbringgestänge 12 den erwähnten Bewegungen 26 des Zugfahrzeuges 10 folgt, sieht die vorliegende Erfindung eine regelbare Koppelung des Zugfahrzeuges 10 bzw. dessen Stützabschnittes 13 mit dem Spritz- oder Ausbringgestänge 12 vor, deren Funktionsweise anhand der Figuren 2 bis 4 näher erläutert wird.

Die schematische Darstellung der Fig. 2a verdeutlicht eine Heckansicht auf das heckseitig am Fahrzeug 10 oder am zwischen Fahrzeug 10 und Spritz- oder Ausbringgestänge 12 angeordneten Stützabschnitt 13 angehängte und hier lediglich angedeutete Spritz- oder Ausbringgestänge 12, das in seinem Aufhängepunkt 30 drehbar gelagert ist. Diese Drehlagerung 32 im Aufhängepunkt 30 weist eine Drehachse auf, die ungefähr parallel zur Fahrzeuglängsrichtung 28 (vgl. Fig. 1) orientiert ist. Die Drehlagerung 32 ist nicht zwingend im Schwerpunkt des Gestänges 12 angeordnet, so dass der Aufhängepunkt 30 ggf. außerhalb des Schwerpunktes liegen kann.

Das Spritz- oder Ausbringgestänge 12 umfasst ein Mittelteil 34 mit der Drehlagerung 32 sowie beidseitig daran befestigte Ausleger 36, die wahlweise ein- oder mehrfach klappbar ausgebildet sein können, um bspw. in eine für eine Straßen- oder Transportfahrt geeignete Anordnung gebracht werden zu können. An den Auslegern 36 oder Auslegerarmen kann bspw. eine Vielzahl von hier nicht dargestellten Spritzdüsen zum gleichmäßigen und/oder gesteuerten Ausbringen von flüssigem Spritzmittel oder anderem Ausbringgut angeordnet sein. Am Mittelteil 34 befindet sich entfernt vom Aufhängepunkt 30 eine Anlenkung 38 für ein Stellelement 40, das unterschiedlich ausgestaltet sein kann, bspw. als Linearantrieb (vgl. Fig. 2b, Fig. 2c) oder als Drehantrieb (vgl. Fig. 2d). Dieses Stellelement 40 ist über eine fahrzeugfeste Lagerung 44 mit dem Fahrzeug 12 verbunden, typischerweise mit dem Rahmenabschnitt 11 oder dem Stützabschnitt 13.

Wie die schematische Ansicht der Fig. 2a erkennen lässt, kann über das Stellelement 40 das Mittelteil 34 mitsamt seinen Auslegern 36 um die Drehlagerung 32 verschwenkt werden, was bspw. bei einer Fahrt entlang einer geneigten Bodenoberfläche 16 erforderlich sein kann, um die beiden Ausleger 36 annähernd parallel zur Bodenoberfläche 16 auszurichten. Gemäß der vorliegenden Erfindung stellt jedoch das Stellelement 40 bei einer Fahrt des Zugfahrzeuges 10 über eine ebene Bodenoberfläche 16 zwar eine mechanische Verbindung zwischen der Anlenkung 38 am Mittelteil 34 und der fahrzeugfesten Lagerung 44 bzw. der Verankerung am Rahmenabschnitt 11 oder am Stützabschnitt 13 her, doch bleibt diese Verbindung auch bei Relativbewegungen und -verschwenkungen des Gestänges 12 um die Drehlagerung 32 annähernd stellkraftfrei bzw. frei von Stellmomenten, was nur durch eine sehr schnelle Stellbewegung des Stellelementes 40 annähernd in Echtzeit zu gewährleisten ist. Der Grund hierfür liegt darin, dass das Gestänge 12 - absolut gesehen - weitgehend in Ruhe bleiben soll, während sich das Fahrzeug bewegt. Die daraus unvermeidlichen Relativbewegungen und -verschwenkungen des Gestänges 12 werden erfasst und in der Ansteuerung des Stellelementes 40 berücksichtigt.

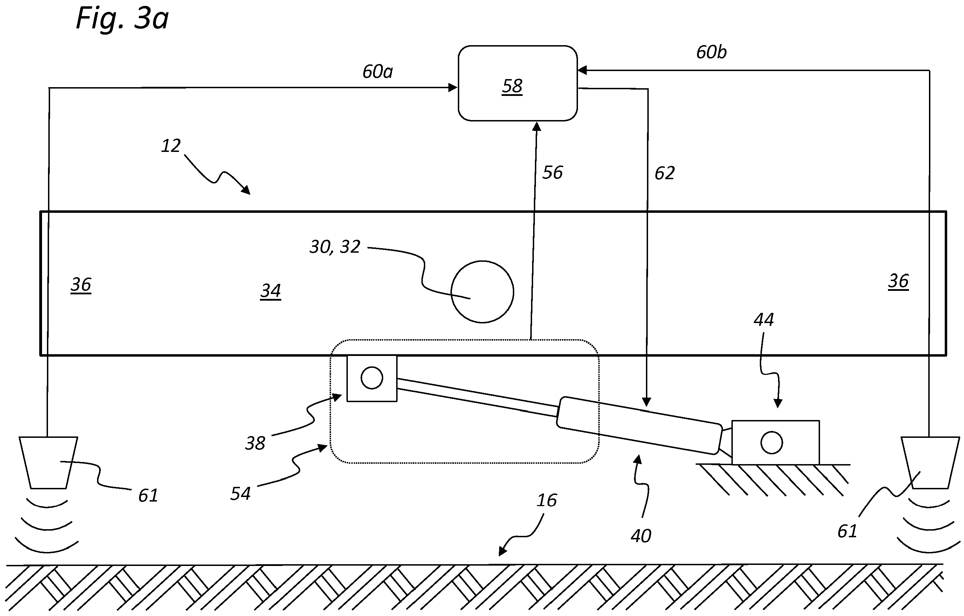

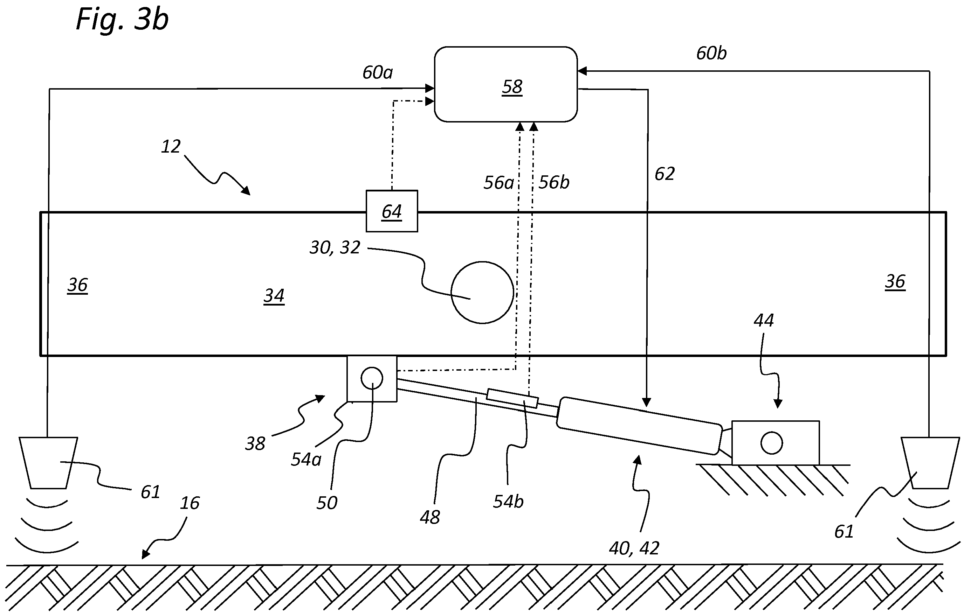

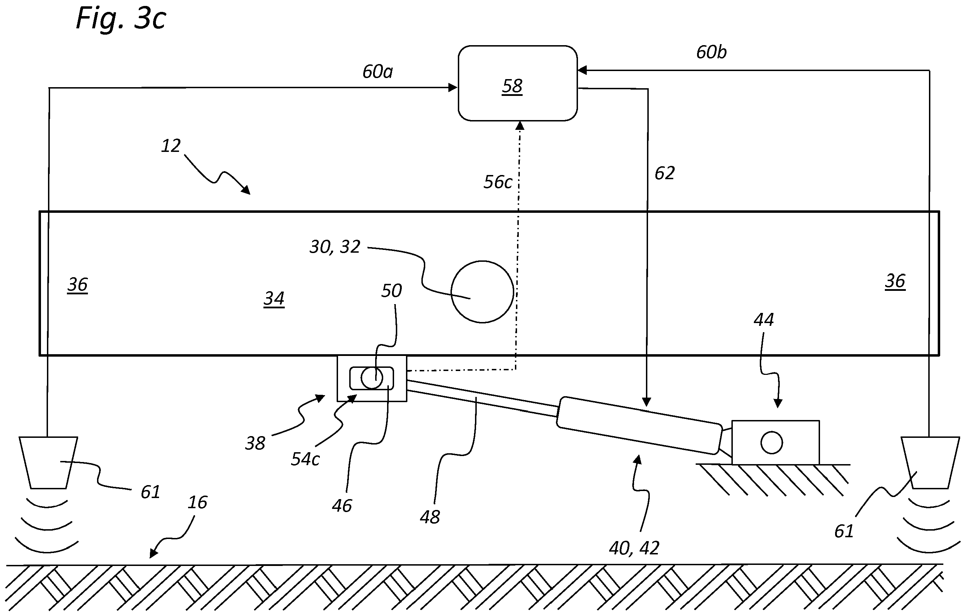

Die schematische Darstellung der Fig. 2b verdeutlicht eine Ausführungsvariante, bei der das Stellelement 40 durch einen Hydraulikzylinder 42 oder durch einen anderen Linearantrieb gebildet ist, der zwischen der Anlenkung 38 am Mittelteil 34 des Gestänges 12 und der fahrzeugfesten Lagerung 44 am Rahmen- oder Stützabschnitt 11, 13 des Fahrzeuges 10 angelenkt ist. Die Anlenkung 38 des Stellelements 40 bzw. des Hydraulikzylinders 42 am Mittelteil 34 des Spritz- oder Ausbringgestänges 12 umfasst im gezeigten Ausführungsbeispiel eine weitgehend spielfreie Lagerung eines einseitig mit dem Stellelement 40 verbundenen Bolzens 50 in einer entsprechenden Bolzenaufnahme. Fährt das landwirtschaftliche Zugfahrzeug über den Ackerboden 16, sorgen Bodenunebenheiten für Aufbaubewegungen des Zugfahrzeuges, bei denen jedoch das Spritz- oder Ausbringgestänge 12 weitgehend in Ruhe bleiben soll. Somit treten Relativbewegungen und/oder -kräfte zwischen dem Zugfahrzeug und dem Spritz- oder Ausbringgestänge 12 auf. Um die Relativbewegungen oder Relativkräfte des Gestänges 12 gegenüber dem Rahmen 11 oder Stützabschnitt 13 erfassen zu können, ist eine geeignete Sensorik erforderlich, die bspw. durch Kraftaufnehmer im Bereich der Bolzenaufnahme bzw. des Bolzens 50 und/oder am Stellelement 40 selbst gebildet sein kann, wie dies anhand der Fig. 3 näher erläutert ist.

Auch bei der Variante gemäß Fig. 2c ist das Stellelement 40 durch einen Hydraulikzylinder 42 oder durch einen anderen Linearantrieb gebildet, der zwischen der Anlenkung 38 am Mittelteil 34 des Gestänges 12 und der fahrzeugfesten Lagerung 44 am Rahmen- oder Stützabschnitt 11, 13 des Fahrzeuges 10 angelenkt ist. Die Anlenkung 38 des Stellelements 40 bzw. des Hydraulikzylinders 42 am Mittelteil 34 des Spritz- oder Ausbringgestänges 12 umfasst im gezeigten Ausführungsbeispiel eine mit Spiel versehene Lagerung eines mit dem Stellelement 40 verbundenen Bolzens 50 in einer als Langloch 46 ausgebildeten Bolzenaufnahme. Um die Relativbewegungen des Gestänges 12 gegenüber dem Rahmen 11 oder Stützabschnitt 13, die bei ruhendem Gestänge 12 und mehr oder weniger schwankendem Fahrzeug auftreten können, erfassen zu können, ist eine geeignete Sensorik erforderlich, die bspw. durch einen mechanischen oder optischen Wegsensor im Bereich der Bolzenlagerung 46, 50 gebildet sein kann, wie dies anhand der Fig. 3 näher erläutert ist.

Bei der Variante gemäß Fig. 2d ist das Stellelement 40 durch einen Drehantrieb 43 gebildet, der zwischen der Anlenkung 38 am Mittelteil 34 des Gestänges 12 und der fahrzeugfesten Lagerung 44 am Rahmen- oder Stützabschnitt 11, 13 des Fahrzeuges 10 angelenkt ist. Der bspw. durch einen hydraulischen oder elektrischen Antriebsmotor gebildete Drehantrieb 43 kann wahlweise als koaxial zur Drehlagerung 32 angeordneter Direktantrieb ausgebildet sein oder über einen Getriebeuntersetzung verfügen, um eine Drehmomentverstärkung bei Verwendung eines kompakteren Antriebsmotors erzielen zu können. Um bei Fahrzeugbewegungen, bspw. aufgrund von Bodenunebenheiten, bei denen das Spritz- oder Ausbringgestänge 12 weitgehend in Ruhe bleiben soll, die Relativverdrehungen des Gestänges 12 gegenüber dem Rahmen 11 oder Stützabschnitt 13 erfassen zu können, ist eine geeignete Sensorik erforderlich, die bspw. durch einen mechanischen oder optischen Wegsensor im Bereich der Bolzenlagerung 46, 50 gebildet sein kann. Wahlweise kann ein solcher Sensor im gezeigten Ausführungsbeispiel auch im Antriebsmotor integriert sein. Eine sinnvolle Variante besteht auch darin, die ggf. schwankenden Drehmomente durch Auswertung der vom elektrischen Motor gelieferten elektrischen Signale bei Drehbewegungen zu erfassen und aus diesen elektrischen Signalen Werte für die auf die Motorwelle wirkenden Drehmomente zu gewinnen.

Die schematischen Darstellungen der Figuren 3a, 3b und 3c zeigen mehrere Ausführungsvarianten der Anlenkung des Stellelements 40 bzw. der damit in Verbindung stehenden Sensorik 54 zu dessen Ansteuerung. Die in Fig. 3a lediglich angedeutete Sensoreinrichtung 54 liefert ein Ausgangssignal 56 an eine Steuerungs- und/oder Regelungseinheit 58, die zudem Sensor- bzw. Sollwertsignale 60a und 60b von wenigstens zwei Abstandssensoren 61 verarbeitet, die jeweils an den Auslegern 36 angeordnet sind und jeweils Signalwerte für einen gemessenen Abstand der Auslegerarme 36 zum Boden 16 liefern. Diese Abstandssensoren 61 können bspw. durch Ultraschallsensoren oder durch optische Sensoren o. dgl. gebildet sein. Auf Basis der Sensorsignale 60a und 60b sowie des Ausgangssignals der Sensoreinrichtung 54 generiert die Steuerungs- und/oder Regelungseinheit 58 ein Stellsignal 62 für das Stellelement 40, das auf eine Weise angesteuert werden kann, dass die mechanische Verbindung zwischen der Anlenkung 38 am Gestänge 12 und der fahrzeugfesten Lagerung 44 annähernd stellkraft- und momentenfrei gehalten werden kann.

Die in Fig. 3b gezeigte Ausführungsvariante entspricht prinzipiell der in Fig. 2b bereits angedeuteten Variante, bei der das Stellelement 40 durch einen doppelt wirkenden Hydraulikzylinder 42 gebildet ist, dessen Kolbenstange 48 in einem Bolzen 50 endet, der in der Anlenkung 38 am Mittelteil 34 weitgehend spielfrei gelagert ist. Wahlweise kann diese Anlenkung 38 mit einem geeigneten Kraftsensor 54a ausgestattet sein, der die durch den Bolzen 50 übertragenen Kräfte erfasst, daraus ein erstes Ausgangssignal 56a generiert und dadurch die mechanische Verbindung zwischen der Lagerung 44 und der Anlenkung 38 mittels geeigneter Ansteuerung des Stellelements 40 über das in der Steuerungs- und/oder Regelungseinheit 58 generierte Stellsignal 62 annähernd kräfte- und momentenfrei hält.

Alternativ oder zusätzlich kann auch an der Kolbenstange 48 oder an anderer geeigneter Stelle ein Dehnungssensor 54b oder ein geeigneter Kraftsensor o. dgl. angeordnet sein, der durch eine Erfassung der auf die Kolbenstange 48 wirkenden Spannungs- und/oder Dehnungskräfte ein zweites Ausgangssignal 56b generiert und auf diese Weise die mechanische Verbindung zwischen der Lagerung 44 und der Anlenkung 38 mittels geeigneter Ansteuerung des Stellelements 40 über das in der Steuerungs- und/oder Regelungseinheit 58 generierte Stellsignal 62 annähernd kräfte- und momentenfrei halten kann.

Darüber hinaus kann am Gestänge 12, insbesondere an dessen Mittelteil 34 ein Neigungssensor 64 angeordnet sein, dessen Signale ergänzend in der Einheit 58 ausgewertet werden können, um daraus im Zusammenhang mit den weiteren erwähnten Sensorwerten ein sinnvolles Stellsignal 62 gewinnen zu können. Der übrige Aufbau der in Fig. 3b gezeigten Variante mit den beiden Abstandssensoren 61 und weiteren Komponenten kann der in Fig. 3a dargestellten Ausführung entsprechen.

Weitere Varianten zur Erfassung der Stellkräfte und/oder Stellbewegungen zwischen dem Mittelteil 34 des Spritz- oder Ausbringgestänges 12 und der fahrzeugfesten Lagerung 44, d.h. dem Rahmen des in den Figuren 3 nicht dargestellten Fahrzeuges, sind denkbar und sinnvoll realisierbar. So kann die Sensorik bspw. auch durch geeignete Drucksensoren gebildet sein, die im Druckfluidkreislauf des Stellelementes 40 angeordnet sind und bspw. Änderungen des hydraulischen oder pneumatischen Drucks im Bereich des Stellelementes 40, des Hydraulikzylinders 42 und/oder dessen Druckleitungen angeordnet sind und Druckschwankungen erfassen, die sich aus einer Relativbewegung zwischen dem Spritz- oder Ausbringgestänge 12 und dem Fahrzeug bei Schwenkbewegungen um den Aufhängepunkt 30 ergeben. Bei einer solchen optionalen Drucksensorik kann es sinnvoll sein, die Reibungseffekte, die bspw. auf Gleitbewegungen der Kolbenstange 48 entlang von Hydraulikdichtungen zurückzuführen sind, durch Bauteilkenngrößen zu berücksichtigen. Solche Kenngrößen lassen sich den weitgehend normierten Bauteilen zuordnen, die als Stellelemente 40 normalerweise Verwendung finden, so dass die Reibungsanteile und -effekte, die den gemessenen Druckwerten überlagert sind, mit ausreichender Genauigkeit bekannt sind und in den Kräfteberechnungen berücksichtigt und eliminiert werden können.

Die in Fig. 3c gezeigte Ausführungsvariante entspricht prinzipiell der in Fig. 2c bereits angedeuteten Variante, bei der das Stellelement 40 durch einen doppelt wirkenden Hydraulikzylinder 42 gebildet ist, dessen Kolbenstange 48 in einem Bolzen 50 endet, der in der Anlenkung 38 am Mittelteil 34 im Langloch 46 gelagert ist. Wahlweise kann diese Anlenkung 38 mit einem geeigneten optischen und/oder mechanischen Wegsensor 54c ausgestattet sein, der die kleinen Auslenkungen des Bolzens 50 im Langloch 46 erfasst, daraus ein drittes Ausgangssignal 56c generiert und dadurch die mechanische Verbindung zwischen der Lagerung 44 und der Anlenkung 38 mittels geeigneter Ansteuerung des Stellelements 40 über das in der Steuerungs- und/oder Regelungseinheit 58 generierte Stellsignal 62 annähernd kräfte- und momentenfrei hält. Der übrige Aufbau der in Fig. 3c gezeigten Variante mit den beiden Abstandssensoren 61 und weiteren Komponenten wie bspw. dem Neigungssensor 64 kann der in den Figuren 3a und/oder 3b dargestellten Ausführung entsprechen. Selbstverständlich können weitere Sensorbauarten als Wegsensoren 54c eingesetzt werden, bspw. induktive Sensoren oder Dreherfassungssensoren o. dgl.

Abhängig von den Signalen 56 und 60 generiert die Steuerungs- und/oder Regelungseinheit 58 ein Stellsignal 62 für eine hier nicht dargestellte Druckversorgungseinheit, mit welcher der Hydraulikzylinder 42 in Verbindung steht. Nur die sehr schnell arbeitende Echtzeitregelung mittels der Stellsignale 62 kann für die gewünschte Kräfte- oder Momentenfreiheit der mechanischen Verbindung durch das Stellelement 40 sorgen. Der Regelungsmechanismus für das Stellelement 40 stellt dieses bzw. den doppelt wirkenden Hydraulikzylinder 42 weitgehend verzögerungslos allen Auslenkungen des Fahrzeugs 10 gegenüber dem Mittelteil 34 um die Schwenklagerung 32 im Aufhängepunkt 30 nach. Das Spritz- oder Ausbringgestänge 12 führt normalerweise keine eigenständigen Reaktionsbewegungen aufgrund von Fahrzeugbewegungen aus, sondern neigt dazu, den Fahrzeugbewegungen nicht zu folgen und bei allen Fahrzeugbewegungen (vgl. Fig. 1) weitgehend statisch und in Ruhe zu bleiben. Um allerdings alle ungewollten Reaktionsbewegungen des Spritz- oder Ausbringgestänges 12 zuverlässig zu unterdrücken, folgt die Kolbenstange 48 des Hydraulikzylinders 42 nahezu verzögerungfrei allen Relativbewegungen des Fahrzeugs 10 gegenüber dem Spritz- oder Ausbringgestänge 12, bei denen eine Schwenkbewegung um die Drehlagerung 32 erfolgt, so dass die Kolbenstange 48 des Hydraulikzylinders 42 über die Anlenkung 38 bewegt wird. Gleiches gilt sinngemäß auch für die Variante mit Drehantrieb (vgl. Fig. 2d).

Diese Quasi-"Echtzeit"-Regelung ist dadurch in der Lage, den Zylinder 42 allen Auslenkungen nachzustellen, gleichzeitig aber keine nennenswerten Kräfte vom Fahrzeug 10 in das Mittelteil 34 einzuleiten. Die Regelung beruht darauf, dass die Kräfte und/oder Wege in der Anlenkung 38 erfasst und weitgehend verzögerungsfrei ausgeregelt werden, so dass trotz mechanischer Verbindung über das Stellelement 40 das Spritz- oder Ausbringgestänge 12 annähernd in der zuvor eingestellten Lage verbleibt, unabhängig von den Aufbaubewegungen und Schwankungen des Zug- oder Trägerfahrzeugs 10, wenn dies über den Boden 16 fährt. Der Regelungsmechanismus sorgt somit für eine aktive "Aus"-Regelung der Wankbewegungen 26 des Fahrzeuges 10.

Um den teilweise sehr schnellen Relativbewegungen zwischen Träger- oder Zugfahrzeug 10 und dem Mittelteil 34 der Spritzanordnung 12 folgen zu können, ist es sinnvoll, wenn das Stellelement 40 oder der doppelt wirkende fluidische Zylinder 42 Verfahrgeschwindigkeiten von wenigstens 200 mm/s, insbesondere von mehr als 400 mm/s realisieren kann. Als vorteilhaft hat sich eine Verfahrgeschwindigkeit des Stellelementes 40 bzw. Stellzylinders 42 von mehr als 500 mm/s herausgestellt, bezogen auf eine wirksame Hebellänge von ca. 500 mm zwischen Anlenkung 38 und der Drehlagerung 32 des Spritz- oder Ausbringgestänges 12.

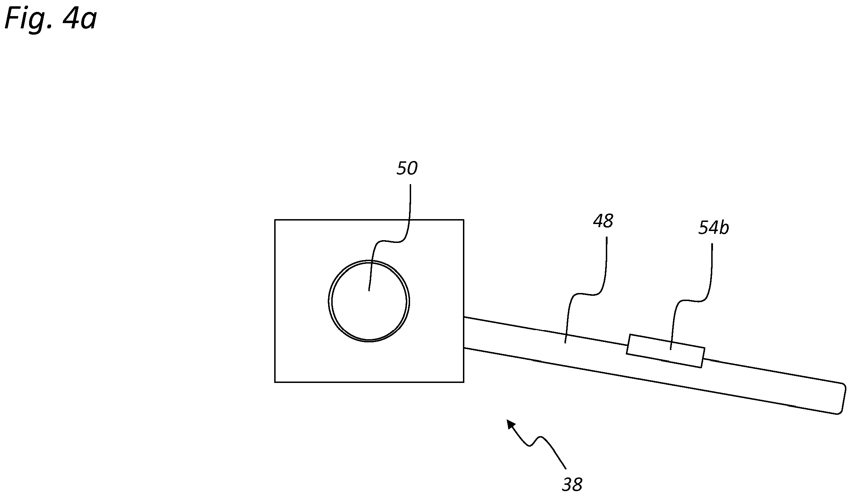

Die schematische Darstellung der Fig. 4a verdeutlicht nochmals die weitgehend spielfreie Lagerung des mit der Kolbenstange 48 des als Linearantrieb ausgebildeten Stellelements 40 verbundenen Bolzens 50 in der Aufnahme der Anlenkung 38, die mit dem Mittelteil 34 verbunden ist. Diese Variante (vgl. Fig. 2b, Fig. 3b) eignet sich insbesondere für den Einsatz eines bspw. an der Kolbenstange 48 angeordneten Dehnungssensors 54b.

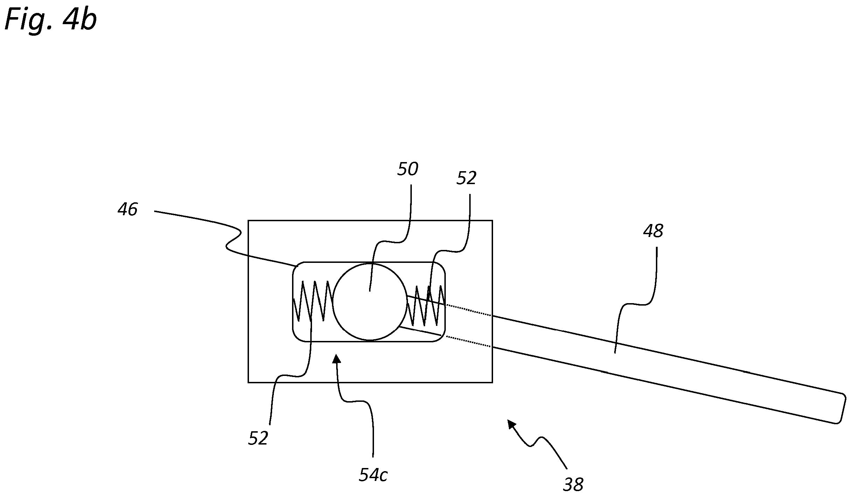

Die schematische Darstellung der Fig. 4b verdeutlicht weiterhin die spielbehaftete Lagerung des mit der Kolbenstange 48 des als Linearantrieb ausgebildeten Stellelements 40 verbundenen Bolzens 50 im Langloch 46 der Anlenkung 38, die mit dem Mittelteil 34 verbunden ist. Auf beiden Seiten des Bolzens 50 befinden sich Kraftübertragungselemente wie bspw. die dargestellten Druckfedern 52, die für die Abstützung des Bolzens 50 im Langloch 46 sorgen. Über einen geeigneten Sensor (z.B. Sensor 54c; vgl. Fig. 3c) wird zudem die Position des Bolzens 50 im Langloch 46 erfasst.

Im ersten Betriebsmodus wird der Stellantrieb 40 derart angesteuert, dass sich der Bolzen 50 immer annähernd mittig im Langloch 46 befindet und so keine Stellkräfte über die Federn 52 übertragen werden.

Im zweiten Betriebsmodus wird der Stellantrieb 40 derart angesteuert, dass sich der Bolzen 50 um ein definiertes Maß aus der Mitte des Langlochs 46 heraus bewegt. Dadurch wird über die bekannten Federkonstanten der Druckfedern 52 eine definierte Stellkraft in das Gestänge 12 eingeleitet, wodurch dieses in eine gewünschte Position bewegt wird. Allerdings wird auch in diesem Verstellmodus bzw. im zweiten Betriebsmodus die gleichermaßen im ersten Betriebsmodus wirksame Regelung beibehalten und dem Stellelement 40 als überlagertes Stellsignal 62 aufgeprägt, damit auch im Verstellmodus alle auf das Fahrzeug wirkenden Störkräfte und -momente in gleicher Weise ausgeregelt werden können. Das Spritz- oder Ausbringgestänge 12 soll ausschließlich die durch die Bodenneigung vorgegebenen Schwenkbewegungen um die Drehlagerung 32 ausführen, nicht jedoch die Fahrzeugschwankungen aufnehmen, die insbesondere von überfahrenen Bodenunebenheiten herrühren. Auch im zweiten Betriebsmodus, d.h. während des Verschwenkvorganges, wird die gesamte Regelung wie zuvor beschrieben aufrechterhalten, so dass nur eine definierte Stellkraft, die über die Druckfedern 52 übertragen wird, gezielt den Verschwenkungsvorgang einleitet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 9: Ausbringvorrichtung
- 10: Zugfahrzeug, landwirtschaftliches Zugfahrzeug
- 11: Rahmenabschnitt, Aufbauabschnitt
- 12: Spritz- oder Ausbringgestänge
- 13: Stützabschnitt
- 14: Fahrtrichtung
- 16: Boden, Ackerboden, Bodenoberfläche
- 18: Gierbewegungen
- 20: Hochachse, Fahrzeughochachse
- 22: Nickbewegungen
- 24: Querachse, Fahrzeugquerachse
- 26: Wankbewegungen
- 28: Längsachse, Fahrzeuglängsachse
- 30: Aufhängepunkt
- 32: Drehlagerung
- 34: Mittelteil
- 36: Ausleger
- 38: Anlenkung
- 40: Stellelement
- 42: Hydraulikzylinder
- 43: Drehantrieb
- 44: Lagerung, fahrzeugfeste Lagerung
- 46: Langloch
- 48: Kolbenstange
- 50: Bolzen, Befestigungsbolzen
- 52: Druckfeder
- 54: Sensoreinrichtung
- 54a: Kraftsensor
- 54b: Dehnungssensor
- 54c: Wegsensor
- 56: Ausgangssignal
- 56a: erstes Ausgangssignal (des Kraftsensors)
- 56b: zweites Ausgangssignal (des Dehnungssensors)
- 56c: drittes Ausgangssignal (des Wegsensors)
- 58: Steuerungs- und/oder Regelungseinheit
- 60: Sollwertsignal
- 60a, 60b: erstes, zweites Sollwertsignal
- 61: Abstandssensor
- 62: Stellsignal
- 64: Neigungssensor

## Patentansprüche

1. Verfahren zur Bewegungssteuerung und/oder -regelung einer Ausbringvorrichtung (9) zum Ausbringen von flüssigen und/oder festen Wirkstoffen, welche ein an einem selbstfahrenden oder gezogenen Fahrzeug (10) angeordnetes, ungefähr parallel zu einer Fahrtrichtung (14) um einen Aufhängepunkt (30) schwenkbar gelagertes Ausbringgestänge (12) mit einem Mittelteil (34) und seitlichen Auslegerarmen (36) umfasst,
wobei das Mittelteil (34) über wenigstens eine regelbare Stelleinrichtung (40) mit einem Aufbau- oder Rahmenabschnitt (11) und/oder mit einem starr oder beweglich gelagerten Stützabschnitt (13) des Fahrzeuges (10) gekoppelt ist, wobei die Stelleinrichtung (40) in einem ersten Betriebsmodus, in dem das Ausbringgestänge (12) weitestgehend von Drehmomenten um die Schwenkachse durch den Aufhängepunkt (30), resultierend aus Fahrzeugbewegungen (26) um die Fahrzeuglängsachse (28), entkoppelt ist, eine weitgehend stellkraftfreie mechanische Verbindung herstellt, und die in einem zweiten Betriebsmodus bzw. in einem Verstellmodus eine definierte Stellkraft und/oder ein definiertes Stellmoment zwischen dem Mittelteil (34) und dem Stütz-, Aufbau- oder Rahmenabschnitt (13, 11) zur Verschwenkung des Ausbringgestänges (12) relativ zum Stützabschnitt (13), Aufbau oder Rahmen (11) einleitet, weitgehend unabhängig von Störmomenten, die aus Fahrzeugbewegungen resultieren,
a) wobei die regelbare Stelleinrichtung (40) mit wenigstens einem, dem Fahrzeug (10) zugeordneten und dessen Aufbaubewegungen erfassenden Sensorelement (54, 54a, 54b, 54c) gekoppelt ist, dessen Ausgangssignale (56) zur Ansteuerung der Stelleinrichtung (40) genutzt bzw. verarbeitet werden; und
b) **dadurch gekennzeichnet, dass** die regelbare Stelleinrichtung mit wenigstens einem Sensorelement gekoppelt ist, das Stellkräfte und Stell- bzw. Relativbewegungen erfasst, die zwischen dem Mittelteil der Ausbringvorrichtung bzw. des Ausbringgestänges und dem Stütz-, Aufbau- oder Rahmenabschnitt auftreten.

2. Verfahren nach Anspruch 1, bei dem der erste Betriebsmodus insbesondere durch einen Fahrmodus in ebenem Gelände charakterisiert ist, und bei dem der zweite Betriebsmodus bzw. der Verstellmodus durch einen Fahrmodus in geneigtem Gelände charakterisiert ist, und wobei ein Wechsel zwischen erstem und zweitem Betriebsmodus mittels Sensoranordnungen (61, 64) initiiert wird, die eine Fahrzeugneigung und/oder die Abstände zwischen den Auslegerarmen (36) und einer Bodenoberfläche (16) erfassen.

3. Verfahren nach einem der Ansprüche 1 bis 2, bei dem das Sensorelement (54, 54a, 54b, 54c) Bewegungen der Stelleinrichtung (40) und/oder auf die Stelleinrichtung (40) wirkende Stellkräfte zwischen dem Stütz-, Aufbau- oder Rahmenabschnitt (13, 11) und der Anlenkung (38) am Mittelteil (34) erfasst und daraus ein Ausgangssignal (56) zur Ansteuerung der Stelleinrichtung (40) generiert.

4. Verfahren nach einem der Ansprüche 1 bis 2, bei dem Sensorelement, das die Stellkräfte und Stell- bzw. Relativbewegungen erfasst, die zwischen dem Mittelteil der Ausbringvorrichtung bzw. des Ausbringgestänges und dem Stütz-, Aufbau- oder Rahmenabschnitt auftreten, durch eine Drucksensorik oder Drucksensoren gebildet ist, die in einem pneumatischen oder hydraulischen Druckfluidkreislauf der Stelleinrichtung (40) angeordnet sind und Druckschwankungen erfassen, die sich aus einer Relativbewegung zwischen dem Ausbringgestänge (12) und dem Fahrzeug (10) bei Schwenkbewegungen um den Aufhängepunkt (30) ergeben.

5. Verfahren nach einem der Ansprüche 1 bis 4, bei dem die im ersten Betriebsmodus weitgehend stellkraftfreie mechanische Verbindung zwischen dem Mittelteil (34) und dem Stütz-, Aufbau- oder Rahmenabschnitt (13, 11) des Fahrzeugs (10) und/oder der Ausbringvorrichtung (9) mittels annähernd in Echtzeit den Relativbewegungen zwischen dem Ausbringgestänge (12) bzw. dessen Mittelteil (34) und dem Fahrzeug (10) und/oder dem Stütz-, Aufbau- oder Rahmenabschnitt (13, 11) folgenden Stellbewegungen der Stelleinrichtung (40) hergestellt und aufrechterhalten wird.

6. Verfahren nach einem der Ansprüche 1 bis 5, bei dem die im zweiten Betriebsmodus mit definierter Stellkraft und/oder mit definiertem Stellmoment beaufschlagte mechanische Verbindung zwischen dem Mittelteil (34) und dem Stütz-, Aufbau- oder Rahmenabschnitt (13, 11) des Fahrzeugs (10) und/oder der Ausbringvorrichtung (9) mittels annähernd in Echtzeit den Relativbewegungen zwischen dem Ausbringgestänge (12) bzw. dessen Mittelteil (34) und dem Fahrzeug (10) und/oder dem Stütz-, Aufbau- oder Rahmenabschnitt (13, 11) folgenden Stellbewegungen der Stelleinrichtung (40) hergestellt und aufrechterhalten wird.

7. Verfahren nach Anspruch 5 oder 6, bei dem die Stellbewegungen der Stelleinrichtung (40) durch rotatorische Stellbewegungen eines zwischen dem Fahrzeug (10) und/oder dessen Stütz-, Aufbau- oder Rahmenabschnitts (13, 11) und dem Mittelteil (34) angeordneten Drehantriebes (43) oder durch lineare Stellbewegungen eines zwischen dem Fahrzeug (10) und/oder dessen Stütz-, Aufbau- oder Rahmenabschnitts (13, 11) und dem Mittelteil (34) angeordneten Linearantriebes (42) durchgeführt werden.

8. Fahrbare Ausbringvorrichtung (9) zum Ausbringen von flüssigen und/oder festen Wirkstoffen, mit einem an einem selbstfahrenden oder gezogenen Fahrzeug (10) angeordneten, ungefähr parallel zu einer Fahrtrichtung (14) um einen Aufhängepunkt (30) schwenkbar gelagerten Ausbringgestänge (12) mit einem Mittelteil (34) und seitlichen Auslegerarmen (36), wobei das Mittelteil (34) über wenigstens eine regelbare Stelleinrichtung (40) mit einem Aufbau- oder Rahmenabschnitt (11) und/oder mit einem starr oder beweglich gelagerten Stützabschnitt (13) des Fahrzeugs (10) gekoppelt ist, wobei die Stelleinrichtung (40) in einem ersten Betriebsmodus, in dem das Ausbringgestänge (12) weitestgehend von Drehmomenten um die Schwenkachse durch den Aufhängepunkt (30), resultierend aus Fahrzeugbewegungen (26) um die Fahrzeuglängsachse (28), entkoppelt ist, eine weitgehend stellkraftfreie mechanische Verbindung herstellt, und die in einem zweiten Betriebsmodus bzw. in einem Verstellmodus eine definierte Stellkraft und/oder ein definiertes Stellmoment zwischen dem Mittelteil (34) und dem Stütz-, Aufbau- oder Rahmenabschnitt (13, 11) zur Verschwenkung des Ausbringgestänges (12) relativ zum Stützabschnitt (13), Aufbau oder Rahmen (11) einleitet, und dies insbesondere weitgehend unabhängig von Störmomenten, die aus Fahrzeugbewegungen resultieren,
a) wobei die regelbare Stelleinrichtung (40) mit wenigstens einem, dem Fahrzeug (10) zugeordneten und dessen Aufbaubewegungen erfassenden Sensorelement (54, 54a, 54b, 54c) gekoppelt ist, dessen Ausgangssignale (56) zur Ansteuerung der Stelleinrichtung (40) genutzt bzw. verarbeitet werden; und
b) **dadurch gekennzeichnet, dass** die regelbare Stelleinrichtung mit wenigstens einem Sensorelement gekoppelt ist, das Stellkräfte und Stell- bzw. Relativbewegungen erfasst, die zwischen dem Mittelteil der Ausbringvorrichtung bzw. des Ausbringgestänges und dem Stütz-, Aufbau- oder Rahmenabschnitt auftreten.

9. Vorrichtung nach Anspruch 8, bei dem das Sensorelement (54, 54c), das die Stellkräfte und Stell- bzw. Relativbewegungen erfasst, die zwischen dem Mittelteil der Ausbringvorrichtung bzw. des Ausbringgestänges und dem Stütz-, Aufbau- oder Rahmenabschnitt auftreten, durch einen optischen oder mechanischen Weg- und/oder Winkelerfassungssensor zur Erfassung von Bewegungen der Stelleinrichtung (40) zwischen dem Stütz-, Aufbau- oder Rahmenabschnitt (13, 11) und der Anlenkung (38) am Mittelteil (34) gebildet ist und bei dem das Sensorelement (54) durch wenigstens einen Kraftsensor (54a) zur Erfassung von auf die Stelleinrichtung (40) einwirkenden Relativkräften zwischen dem Stütz-, Aufbau- oder Rahmenabschnitt (13, 11) und der Anlenkung (38) am Mittelteil (34) gebildet ist.

10. Vorrichtung nach Anspruch 8, bei dem das Sensorelement (54, 54c), das die Stellkräfte und Stell- bzw. Relativbewegungen erfasst, die zwischen dem Mittelteil der Ausbringvorrichtung bzw. des Ausbringgestänges und dem Stütz-, Aufbau- oder Rahmenabschnitt auftreten, durch eine Drucksensorik oder Drucksensoren gebildet ist, die in einem pneumatischen oder hydraulischen Druckfluidkreislauf der Stelleinrichtung (40) angeordnet sind und Druckschwankungen erfassen, die sich aus einer Relativbewegung zwischen dem Ausbringgestänge (12) und dem Fahrzeug (10) bei Schwenkbewegungen um den Aufhängepunkt (30) ergeben.

11. Vorrichtung nach einem der Ansprüche 8 bis 10, bei der das Stellelement (40) durch einen doppelt wirkender fludischen Aktor, insbesondere durch einen doppelt wirkenden Hydraulikzylinder (42) oder Pneumatikzylinder gebildet ist.

12. Vorrichtung nach einem der Ansprüche 8 bis 9, bei der das Stellelement (40) durch einen elektrischen Linearantrieb gebildet ist oder einen elektrischen, hydraulischen oder pneumatischen Drehantrieb (43) gebildet ist, der zwischen dem Aufbau und dem Mittelteil (34) angeordnet ist.

13. Vorrichtung nach einem der Ansprüche 8 bis 12, bei dem der Stützabschnitt (13) durch einen starr oder beweglich am Fahrzeug (10) gelagerten Koppelrahmen gebildet ist, an dem das Mittelteil (34) des Ausbringgestänges (12) beweglich gelagert ist.

## Claims

1. A method for the movement control and/or movement regulation of a spreading apparatus (9) for spreading liquid and/or solid active agents, which spreading apparatus (9) comprises a spreading boom (12) with a middle part (34) and lateral cantilever arms (36), the spreading boom (12) being arranged at a self-propelled or towed vehicle (10) and being mounted to be pivotable about a suspension point (30) approximately parallel to a driving direction (14),
wherein the middle part (34) is coupled by way of at least one regulatable adjustment device (40) to a body section or frame section (11) and/or to a rigidly or movably mounted support section (13) of the vehicle (10),
wherein the adjustment device (40) produces a largely adjustment-force-free mechanical connection in a first operating mode, in which the spreading boom (12) is to the greatest possible extent decoupled from torques about the swivel axis through the suspension point (30), which torques result from vehicle movements (26) about the longitudinal vehicle axis (28), and, in a second operating mode or, as the case may be, in an adjustment mode, transmits, largely independently of disturbance torques resulting from vehicle movements, a defined adjustment force and/or a defined adjustment torque between the middle part (34) and the support section, body section, or frame section (13, 11) for the purpose of swivelling the spreading boom (12) in relation to the support section (13), body, or frame (11).
a) in which the regulatable adjustment device (40) is coupled with at least one sensor element (54, 54a, 54b, 54c) associated with the vehicle (10) and detecting its vehicle body movements, the output signals (56) of which sensor element (54, 54a, 54b, 54c) are used or, as the case may be, processed for controlling the adjustment device (40); and
b) **characterized in that** the regulatable adjustment device (40) is coupled with at least one sensor element, which detects adjustment forces and adjustment movements or, as the case may be, relative movements occurring between the middle part (34) of the spreading apparatus (9) and the support section, body section, or frame section.

2. The method as recited in claim 1, in which the first operating mode is **characterised, in** particular, by a drive mode in even terrain, and in which the second operating mode or, as the case may be, the adjustment mode is **characterised by** a drive mode in inclined terrain, and wherein a change between the first and the second operating mode is initiated by means of sensor arrangements (61, 64), which detect a vehicle inclination and/or the spacings between the cantilever arms (36) and a ground surface (16).

3. The method according to any one of claims 1 to 2, in which the sensor element (54, 54a, 54b, 54c) detects movements of the adjustment device (40) and/or actuating forces acting on the adjustment device (40) between support section, body section, or frame section (13, 11) and the linkage (38) on the middle part (34) and generates an output signal (56) therefrom for controlling the adjusting device (40).

4. The method according to one of claims 1 to 2, in which the sensor element which detects the adjustment forces and adjustment movements or, as the case may be, relative movements occurring between the middle part of the spreading apparatus and the support section, body section, or frame section is provided by a pressure sensing technology or pressure sensors which are arranged in a pneumatic or hydraulic pressure fluid circuit of the adjustment device and detect pressure fluctuations which result from a relative movement between the spreading boom (12) and the vehicle (10) during pivoting movements about the suspension point (30).

5. The method as recited in one of the claims 1 to 4, in which the largely adjustment-force-free mechanical connection between the middle part (34) and the support section, body section, or frame section (13, 11) of the vehicle (10) and/or the spreading apparatus (9) in the first operating mode is produced and maintained by means of adjustment movements of the adjustment device (40), which adjustment movements approximately in real time follow the relative movements between the spreading boom (12) or, as the case may be, its middle part (34) and the vehicle (10) and/or the support section, body section, or frame section (13, 11).

6. The method as recited in one of the claims 1 to 5, in which the mechanical connection between the middle part (34) and the support section, body section, or frame section (13, 11) of the vehicle (10) and/or the spreading apparatus (9) in the second operating mode, with the defined adjustment force and/or with the defined adjustment torque applied to it, is produced and maintained by means of adjustment movements of the adjustment device (40), which adjustment movements approximately in real time follow the relative movements between the spreading boom (12) or, as the case may be, its middle part (34) and the vehicle (10) and/or the support section, body section, or frame section (13, 11).

7. The method as recited in claim 5 or 6, in which the adjustment movements of the adjustment device (40) are carried out by rotatory adjustment movements of a rotary actuator (43) arranged between the vehicle (10) and/or its support section, body section, or frame section (13, 11) and the middle part (34) or by linear adjustment movements of a linear actuator (42) arranged between the vehicle (10) and/or its support section, body section, or frame section (13, 11) and the middle part (34).

8. A drivable spreading apparatus (9) for spreading liquid and/or solid active agents, with a spreading boom (12) with a middle part (34) and lateral cantilever arms (36), the spreading boom (12) being arranged at a self-propelled or towed vehicle (10) and being mounted to be pivotable about a suspension point (30) approximately parallel to a driving direction (14),
wherein the middle part (34) is coupled by way of at least one regulatable adjustment device (40) to a body section or frame section (11) and/or to a rigidly or movably mounted support section (13) of the vehicle (10),
wherein the adjustment device (40) produces a largely adjustment-force-free mechanical connection in a first operating mode, in which the spreading boom (12) is to the greatest possible extent decoupled from torques about the swivel axis through the suspension point (30), which torques result from vehicle movements (26) about the longitudinal vehicle axis (28), and, in a second operating mode or, as the case may be, in an adjustment mode, transmits, in particular largely independently of disturbance torques resulting from vehicle movements, a defined adjustment force and/or a defined adjustment torque between the middle part (34) and the support section, body section, or frame section (13, 11) for the purpose of swivelling the spreading boom (12) in relation to the support section (13), body, or frame (11),
a) in which the regulatable adjustment device (40) is coupled with at least one sensor element (54, 54a, 54b, 54c) associated with the vehicle (10) and detecting its vehicle body movements, the output signals (56) of which sensor element (54, 54a, 54b, 54c) are used or, as the case may be, processed for controlling the adjustment device (40); and
b) **characterized in that** the regulatable adjustment device (40) is coupled with at least one sensor element, which detects adjustment forces and adjustment movements or, as the case may be, relative movements occurring between the middle part (34) of the spreading apparatus (9) and the support section, body section, or frame section.

9. The apparatus as recited in claim 8, wherein the sensor element (54, 54c), which is detecting adjustment forces and/or adjustment movements or, as the case may be, relative movements between the middle part of the spreading apparatus or, as the case may be, the spreading boom (12) and the support section, body section, or frame section (13, 11), is provided by an optical or mechanical sensor for position detection and/or angle detection for the purpose of detecting movements of the adjustment device (40) between the support section, body section, or frame section (13, 11) and the linkage (38) at the middle part (34) and/or in which the sensor element (54) is provided by at least one force sensor (54a) for detecting relative forces acting on the adjustment device (40) between the support section, body section, or frame section (13, 11) and the linkage (38) at the middle part (34).

10. The apparatus as recited in claim 8, in which the sensor element (54, 54c) which detects the adjustment forces and adjustment movements or, as the case may be, relative movements occurring between the middle part of the spreading apparatus and the support section, body section, or frame section is provided by a pressure sensing technology or pressure sensors which are arranged in a pneumatic or hydraulic pressure fluid circuit of the adjustment device and detect pressure fluctuations which result from a relative movement between the spreading boom (12) and the vehicle (10) during pivoting movements about the suspension point (30).

11. The apparatus as recited one of the claims 8 to 10, in which the adjustment element (40) is formed by a double-acting fluidic actuator, in particular by a double-acting hydraulic cylinder (42) or pneumatic cylinder.

12. The apparatus as recited in claim 8 or 9, in which the adjustment element (40) is provided by an electric linear actuator or by an electric, hydraulic, or pneumatic rotary actuator (43), which is arranged between the body and the middle part (34).

13. The apparatus as recited in one of the claims 8 to 12, in which the support section (13) is formed by a coupling frame mounted rigidly or movably at the vehicle (10), on which coupling frame the middle part (34) of the spreading boom (12) is movably mounted.

## Revendications

1. Procédé de commande et/ou de régulation de déplacement d'un dispositif de distribution (9) destiné à distribuer des principes actifs liquides et/ou solides, lequel comprend une tige de distribution (12) disposée sur un véhicule (10) automoteur ou tracté, montée de manière à pouvoir pivoter autour d'un point de suspension (30) de manière approximativement parallèle par rapport à une direction de conduite (14) avec une partie centrale (34) et des bras de flèche (36) latéraux,
dans lequel la partie centrale (34) est couplée par l'intermédiaire d'au moins un système de réglage (40) pouvant être réglé à une section de carrosserie ou de châssis (11) et/ou à une section d'appui (13) montée de manière rigide ou mobile du véhicule (10), dans lequel le système de réglage (40) établit une liaison amplement mécanique sans force de réglage dans un premier mode de fonctionnement, dans lequel la tige de distribution (12) est dans une large mesure découplée du couple de rotation autour de l'axe de pivotement par le point de suspension (30), résultant de déplacements de véhicule (26) autour de l'axe longitudinal de véhicule (28), et qui applique, dans un deuxième mode de fonctionnement ou dans un mode d'ajustement, une force de réglage définie et/ou un couple de réglage défini entre la partie centrale (34) et la section d'appui, la section de carrosserie ou la section de châssis (13, 11) pour faire pivoter la tige de distribution (12) par rapport à la section d'appui (13), la section de carrosserie ou de châssis (11), largement indépendamment de couples perturbateurs, qui résultent de déplacements de véhicule,
a) dans lequel le système de réglage (40) pouvant être réglé est couplé à au moins un élément de capteur (54, 54a, 54b, 54c) associé au véhicule (10) et détectant ses mouvements de carrosserie, dont les signaux de sortie (56) sont utilisés ou traités pour piloter le système de réglage (40) ; et
b) **caractérisé en ce que** le système de réglage régulable est couplé à au moins un élément de capteur, qui détecte des forces de réglage ou des déplacements de réglage ou relatifs, qui apparaissent entre la partie centrale du dispositif de distribution ou de la tige de distribution et la section d'appui, de carrosserie ou de châssis.

2. Procédé selon la revendication 1, où le premier mode de fonctionnement est caractérisé en ce particulier par un mode de conduite sur un terrain plat, et où le deuxième mode de fonctionnement ou le mode d'ajustement est **caractérisé par** un mode de déplacement sur un terrain incliné, et dans lequel un passage entre un premier et un deuxième mode de fonctionnement est initié au moyen d'ensembles de capteurs (61, 64), qui détectent une inclinaison de véhicule et/ou les espacements entre les bras de flèche (36) et une surface au sol (16).

3. Procédé selon l'une quelconque des revendications 1 et 2, où l'élément de capteur (54, 54a, 54b, 54c) détecte des déplacements du système de réglage (40) et/ou des forces de réglage agissant sur le système de réglage (40) entre la section d'appui, de carrosserie ou de châssis (13, 11) et l'articulation (38) sur la partie centrale (34) et génère sur cette base un signal de sortie (56) pour piloter le système de réglage (40).

4. Procédé selon l'une quelconque des revendications 1 et 2, où l'élément de capteur, qui détecte les forces de réglage et des déplacements de réglage ou relatifs, qui apparaissent entre la partie centrale du dispositif de distribution ou la tige de distribution et la section d'appui, de carrosserie ou de châssis, est formé par un mécanisme de détection de pression ou des capteurs de pression, qui sont disposés dans un circuit à fluide sous pression pneumatique ou hydraulique du système de réglage (40) et détectent des fluctuations de pression, qui découlent d'un déplacement relatif entre la tige de distribution (12) et le véhicule (10) lors de déplacements par pivotement autour du point de suspension (30).

5. Procédé selon l'une quelconque des revendications 1 à 4, où la liaison mécanique sans force de réglage largement du premier mode de fonctionnement est établie et maintenue entre la partie centrale (34) et la section d'appui, de carrosserie ou de châssis (13, 11) du véhicule (10) et/ou le dispositif de distribution (9) au moyen de déplacements de réglage du système de réglage (40) suivant approximativement en temps réel les déplacements relatifs entre la tige de distribution (12) ou sa partie centrale (34) et le véhicule (10) et/ou la section d'appui, de carrosserie ou de châssis (13, 11).

6. Procédé selon l'une quelconque des revendications 1 à 5, où la liaison mécanique soumise dans le deuxième mode de fonctionnement à l'action d'une force de réglage définie et/ou d'un couple de réglage défini est produite et est maintenue entre la partie centrale (34) et la section d'appui, de carrosserie ou de châssis (13, 11) du véhicule (10) et/ou du dispositif de distribution (9) au moyen de mouvements de réglage du système de réglage (40) suivant approximativement en temps réel les déplacements relatifs entre la tige de distribution (12) ou sa partie centrale (34) et le véhicule (10) et/ou la section d'appui, de carrosserie ou de châssis (13, 11).

7. Procédé selon la revendication 5 ou 6, où les déplacements de réglage du système de réglage (40) sont effectués par des déplacements de réglage rotatifs d'un entraînement en rotation (43) disposé entre le véhicule (10) et sa section d'appui, de carrosserie ou de châssis (13, 11) et la partie centrale (34) ou par des déplacements de réglage linéaires d'un entraînement linéaire (42) disposé entre le véhicule (10) et/ou sa section d'appui, de carrosserie ou de châssis (13, 11) et la partie centrale (34).

8. Dispositif de distribution (9) mobile destiné à distribuer des principes actifs liquides et/ou solides, avec une tige de distribution (12) disposée sur un véhicule (10) automoteur ou tracté, montée de manière à pouvoir pivoter approximativement de manière parallèle par rapport à une direction de conduite (14) autour d'un point de suspension (30) avec une partie centrale (34) et des bras de flèche (36) latéraux, dans lequel la partie centrale (34) est couplée par l'intermédiaire d'au moins un système de réglage (40) régulable à une section de carrosserie ou de châssis (11) et/ou à une section d'appui (13) montée de manière rigide ou de manière mobile du véhicule (10), dans lequel le système de réglage (40) établit une liaison mécanique largement sans force de réglage dans un premier mode de fonctionnement, dans lequel la tige de distribution (12) est découplée largement de couples de rotation autour de l'axe de pivotement par le point de suspension (30), résultant de déplacements de véhicule (26) autour de l'axe longitudinal de véhicule (28) et applique dans un deuxième mode de fonctionnement ou dans un mode d'ajustement une force de réglage définie et/ou un couple de réglage défini entre la partie centrale (34) et la section d'appui, de carrosserie ou de châssis (13, 11) pour faire pivoter la tige de distribution (12) par rapport à la section d'appui (13), à la carrosserie ou châssis (11), et ce en particulier largement indépendamment de couples perturbateurs, qui résultent des mouvements de véhicule,
a) dans lequel le système de réglage (40) régulable est couplé à au moins un élément de capteur (54, 54a, 54b, 54c) associé au véhicule (10) et détectant ses déplacements de carrosserie, dont les signaux de sortie (56) sont utilisés ou traités pour piloter le système de réglage (40) ; et
b) **caractérisé en ce que** le système de réglage régulable est couplé à au moins un élément de capteur, qui détecte des forces de réglage ou des déplacements de réglage ou relatifs, qui apparaissent entre la partie centrale du dispositif de distribution ou de la tige de distribution et la section d'appui, de carrosserie ou de châssis.

9. Dispositif selon la revendication 8, où l'élément de capteur (54, 54c), qui détecte les forces de réglage et des déplacements de réglage ou relatifs, qui apparaissent entre la partie centrale du dispositif de distribution ou de la tige de distribution et la section d'appui, de carrosserie ou de châssis, est formé par un capteur de déplacement et/ou un capteur de détection angulaire optique ou mécanique, destiné à détecter des déplacements du système de réglage (40) entre la section d'appui, de carrosserie ou de châssis (13, 11) et l'articulation (38) sur la partie centrale (34), et où l'élément de capteur (54) est formé par au moins un capteur de force (54a) pour détecter des forces relatives agissant sur le système de réglage (40) entre la section d'appui, de carrosserie ou de châssis (13, 11) et l'articulation (38) sur la partie centrale (34).

10. Dispositif selon la revendication 8, où l'élément de capteur (54, 54c), qui détecte les forces de réglage et des déplacements de réglage ou relatifs, qui apparaissent entre la partie centrale ou le dispositif de distribution ou la tige de distribution et la section d'appui, de carrosserie ou de châssis, est formé par un mécanisme de détection de pression ou des capteurs de pression, qui sont disposés dans un circuit de fluide sous pression pneumatique ou hydraulique du système de réglage (40) et détectent des fluctuations de pression, qui résultent d'un déplacement relatif entre la tige de distribution (12) et le véhicule (10) en cas de déplacements pivotants sur le point de suspension (30) .

11. Dispositif selon l'une quelconque des revendications 8 à 10, où l'élément de réglage (40) est formé par un actionneur fluidique à double action, en particulier par un cylindre hydraulique (42) ou cylindre pneumatique à double action.

12. Dispositif selon l'une quelconque des revendications 8 et 9, où l'élément de réglage (40) est formé par un entraînement linéaire électrique ou est formé par un entraînement en rotation (43) électrique, hydraulique ou pneumatique, qui est disposé entre la carrosserie et la partie centrale (34).

13. Dispositif selon l'une quelconque des revendications 8 à 12, où la section d'appui (13) est formée par un châssis de couplage monté de manière rigide ou mobile sur le véhicule (10), sur lequel la partie centrale (34) de la tige de distribution (12) est montée de manière mobile.
